# EUROPEAN PATENT APPLICATION

(11) **EP 3 342 757 A1**
(43) Date of publication of application: **04.07.2018**
(21) Application number: 16838941.9
(22) Date of filing: 11.07.2016
(51) Int. Cl.: C02F 3/34, C22B 3/18, C22B 3/44

(54) **METHOD FOR REMOVING MANGANESE FROM WASTEWATER**

(30) Priority: 27.08.2015 JP 2015167975
(71) Applicant: Sumitomo Metal Mining Co., Ltd., Tokyo 105-8716 (JP)
(72) Inventor: TAKEDA, Kenji, Niihama-shi Ehime 792-0002 (JP)
(74) Representative: Jones, Nicholas Andrew
(86) International application number: PCT/JP2016/070397
(87) International publication number: WO 2017/033594

(57) **Abstract**

Provided is a method for efficiently removing manganese from a manganese-containing wastewater while minimizing the use amount of chemicals including a neutralizer. The method for manganese removal according to the present invention is for removing manganese from a wastewater discharged from a wet smelting process in which an acid is added to nickel oxide ore and the mixture is subjected to pressure leaching to recover the nickel. The method comprises regulating the pH of the wastewater to 8.0-9.2, supplying the obtained liquid having the regulated pH to a drainage path in which a manganese-oxidizing bacterium is present and which has a length of 3 km or larger, and causing the liquid to pass therethrough over a period of one hour or longer.

## Description

### TECHNICAL FIELD

The present invention relates to a method of removing manganese from wastewater discharged from a hydrometallurgical process or the like using an ore containing manganese such as a nickel oxide ore as a raw material.

### BACKGROUND ART

A hydrometallurgical process, such as a HPAL process in which an acid such as sulfuric acid is added to a nickel oxide ore of a raw material and nickel in the ore is leached into the acid solution at a high temperature and a high pressure and recovered, has an advantage that low grade valuables such as nickel or cobalt in the ore can be efficiently recovered as compared to a pyrometallurgical process which uses a furnace at a high temperature and has been conventionally adopted.

However, the hydrometallurgical process such as a HPAL process also has a disadvantage that impurities such as iron, aluminum, manganese, magnesium, and calcium, which can be efficiently separated as slag in the pyrometallurgical process, coexist at high concentrations in the solution to be the wastewater after the recovery of nickel or cobalt.

These impurities do not have merit enough to be industrially recovered at a high cost but are problematic in terms of the environment when being discharged into the sea as they are. In addition, the wastewater is repeatedly used in the HPAL treatment step for the effective utilization of water resources, and there is also a problem that the concentration of impurities gradually increases in association with the repeated utilization and iron and calcium precipitate and cause pipe clogging. Hence, a method is often used in which a part of the wastewater is taken out and sent to the wastewater treatment step, a neutralizing agent is added to the wastewater to adjust the pH, the impurities are thus precipitated and separated in the form of a hydroxide or an oxide, and the filtrate after treatment is discharged.

Here, there are generally aluminum and manganese as the components which are contained in the wastewater and the target of removal in addition to iron present as suspended particles.

Among them, aluminum is neutralized at a relatively low pH and removed as a hydroxide. Iron can be effectively precipitated and removed by settling the suspended particles with a thickener or the like and then sending the settled particles to the tailings dam to pass therethrough.

However, manganese is present in a dissolved state in the wastewater, and it is thus solidified and removed by adjusting the pH of the wastewater to an alkaline region of 9 or higher or in the form of manganese dioxide by adding an oxidizing agent such as oxygen, sodium hypochlorite, or ozone after adjustment of the pH. In particular, it is not preferable that manganese is present in the wastewater even in a trace amount of about several mg/l since the wastewater is colored. Hence, in practice manganese is required to be removed to a concentration of lower than 1 mg/l and preferably lower than 0.5 mg/l.

Meanwhile, in the industrial HPAL process of nickel oxide ore, the amount of liquid to be handled becomes large in order to recover low grade nickel contained in the raw material, and the amount of wastewater generated as a result is also large. In addition, the HPAL process is often conducted in a reducing atmosphere obtained by the addition of a sulfurizing agent in order to efficiently and separately recover nickel from the impurities. Hence, a large amount of oxidizing agent such as sodium hypochlorite or ozone is required in order to oxidize and remove manganese present in the reducing atmosphere, and this is not preferable in terms of cost and labor.

Hence, an alkali such as slaked lime is added to the wastewater as a neutralizing agent to increase the pH up to from 9 to 9.2 or higher and manganese is precipitated and removed as manganese hydroxide.

However, when a neutralizing agent is added to increase the pH of the wastewater, magnesium contained in the wastewater forms a hydroxide prior to manganese and the alkali added is preferentially consumed for the formation of manganese hydroxide. Hence, there is a problem that it is required to add a neutralizing agent in a more amount than the equivalent of manganese present and this causes an even more increase in cost.

As a method of separating manganese remaining when nickel is recovered from a nickel oxide ore, for example, a method disclosed in Patent Document 1 is known. This method is a method of recovering valuable metals from an oxide ore, which includes [1] a step (a) of leaching an oxide ore that is slurried in advance with a pressurized leachate obtained in a step (b) at normal pressure in an acidic condition by sulfuric acid to obtain a normal pressure leachate and a normal pressure leach residue, [2] a step (b) of reacting the normal pressure leach residue obtained in the step (a) with sulfuric acid at a sufficiently high temperature and a sufficiently high pressure to form a pressurized leachate to obtain a pressurized leachate, [3] a step (c) of adding a neutralizing agent to the normal pressure leachate obtained in the step (a) to separate iron and aluminum in the normal pressure leachate from the normal pressure leachate as a precipitate, [4] a step (d) of adding a neutralizing agent to the normal pressure leachate from which iron and aluminum have been separated in the step (c) to precipitate and recover nickel, cobalt, and zinc in the normal pressure leachate as a hydroxide or a carbonate, and [5] a step (e) of adding a neutralizing agent and an oxidizing agent to the normal pressure leachate from which nickel, cobalt, and zinc have been separated in the step (d) to precipitate and recover manganese in the normal pressure leachate as an oxide and a hydroxide or an oxide and a carbonate upon recovering nickel, cobalt, zinc, and manganese of valuable metals from an oxide ore containing metals such as nickel, cobalt, zinc, manganese, magnesium, iron, aluminum, and chromium.

The method disclosed in Patent Document 1 has an advantage that the pH to be adjusted is a relatively low value of lower than 9. However, this method has a problem that an oxidizing agent is required in addition to a neutralizing agent and the investment in facilities and the cost of chemicals thus increase.

As described above, particularly in the HPAL process, the amount of wastewater handled is enormous and the cost of the neutralizing agent and the oxidizing agent to be used is thus greatly affected even though the difference of pH value to be adjusted is slight. Hence, a method of efficiently separating and removing manganese has been desired.

Patent Document 1: Japanese Unexamined Patent Application, Publication No. 2000-234130

### DISCLOSURE OF THE INVENTION

### Problems to be Solved by the Invention

The present invention has been proposed in view of the circumstances described above, and an object thereof is to provide a method of efficiently removing manganese from wastewater which contains manganese and is discharged through a hydrometallurgical process, particularly a HPAL process generating a large amount of wastewater while suppressing the used amount of a chemical such as a neutralizing agent.

### Means for Solving the Problems

The present inventors have conducted intensive investigations to solve the problem described above. As a result, it has been found out that it is possible to efficiently remove manganese by adjusting the pH of the wastewater containing manganese to be in a predetermined range and allowing the pH-adjusted wastewater to pass through a drainage channel which contains manganese oxidizing bacteria and has a predetermined length, whereby the present invention has been completed.
(1) A first aspect of the present invention is a method of removing manganese, the method including removing manganese from wastewater containing manganese, in which a pH of the wastewater is adjusted to be in a range of 8.0 or higher and 9.2 or lower and a pH-adjusted liquid thus obtained is supplied to a drainage channel which has a length of 3 km or longer and contains manganese oxidizing bacteria and is allowed to pass through the drainage channel over a retention time of 1 hour or longer.
(2) A second aspect of the present invention is the method of removing manganese according to the first aspect, in which a pH value to be adjusted is decreased so that a concentration of manganese in a pH-adjusted liquid increases by 1 mg/l per month after start of an operation and a pH value adjusted is maintained at a time point at which a concentration of manganese in the pH-adjusted liquid reaches 10 mg/l when adjusting a pH of the wastewater.
(3) A third aspect of the present invention is the method of removing manganese according to the first or second aspect, in which the wastewater is wastewater discharged from a hydrometallurgical process to recover nickel by adding an acid to a nickel oxide ore and subjecting the nickel oxide ore to pressure leaching.

### Effects of the Invention

According to the present invention, it is possible to efficiently separate and remove manganese from wastewater which contains manganese and is discharged through a hydrometallurgical process such as a HPAL process while suppressing the used amount of a chemical such as a neutralizing agent.

### BRIEF DESCRIPTION OF THE DRAWINGS

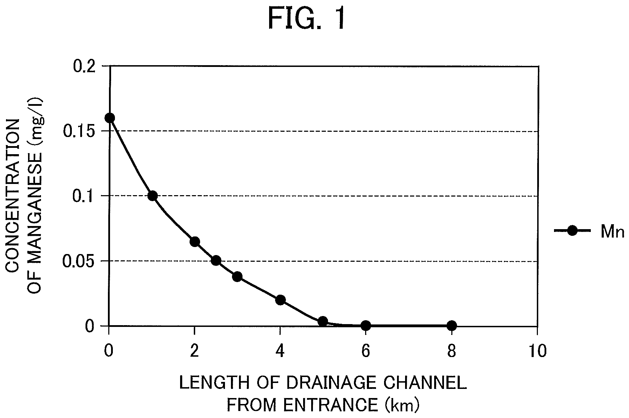

Fig. 1 is a graph illustrating the measurement results for the concentration of manganese in the wastewater sampled at the respective points with respect to the distance of the drainage channel from the entrance through which the wastewater is supplied.

### PREFERRED MODE FOR CARRYING OUT THE INVENTION

Hereinafter, a specific embodiment of the present invention (hereinafter, referred to as the "present embodiment") will be described in detail. Incidentally, the present invention is not limited to the following embodiment, and various modifications can be made without changing the gist of the present invention.

The method of removing manganese according to the present embodiment is a method of removing manganese from wastewater containing manganese. Examples of the wastewater containing manganese may include wastewater discharged through various kinds of metallurgical processes.

Specifically, examples of the wastewater may include wastewater discharged after the separation and recovery of nickel in a hydrometallurgical process (hereinafter, referred to as the "HPAL process") in which nickel is recovered by adding an acid such as sulfuric acid to a nickel oxide ore and subjecting the nickel oxide ore to pressure leaching.

Here, in the HPAL process, leachate obtained by leaching the nickel oxide ore with an acid such as sulfuric acid is subjected to solid-liquid separation from the leach residue slurry while adding a neutralizing agent, and the impurities are then separated as a neutralizing agent is added. Furthermore, after the neutralization treatment, the sulfurization treatment is conducted as a sulfurizing agent is added to the leachate (mother liquor for nickel recovery), and nickel is recovered as a sulfide. Impurities such as manganese, aluminum, and magnesium other than the target of recovery are present in the sulfurized liquid after the sulfurization treatment and transferred to the wastewater treatment step to be separated as a precipitate, and wastewater is obtained. However, manganese which has not been removed by the wastewater treatment remains in this wastewater. Incidentally, the HPAL process includes various kinds of steps, and the amount of wastewater handled is thus enormous as well.

Specifically, this method of removing manganese includes a step (pH adjusting step) of adjusting the pH of wastewater discharged from the HPAL process to be in a range of 8.0 or higher and 9.2 or lower and a step (liquid passing through drainage channel step) of supplying the pH-adjusted liquid thus obtained to the drainage channel in which manganese oxidizing bacteria are present and allowing the liquid to pass through the drainage channel over a predetermined retention time.

In order to efficiently and effectively separate manganese from wastewater containing manganese such as the wastewater discharged from the HPAL process, first the pH of the wastewater is adjusted to be lower than in the conventional method and manganese that can be separated at that pH value is roughly separated, and manganese is then practically completely removed by utilizing manganese oxidizing bacteria in this method of removing manganese.

### [pH Adjusting Step]

In the pH adjusting step, the pH of the wastewater before being supplied to the drainage channel is adjusted prior to the removal of manganese in the wastewater in the drainage channel. In the method of removing manganese according to the present embodiment, manganese that can be separated only by the pH adjustment of wastewater is separated and removed by adjusting the pH of the wastewater containing manganese of the target of treatment as described above.

Specifically, in this pH adjusting step, the pH is adjusted and controlled to be in a range of 8.0 or higher and 9.2 or lower in which a small amount of manganese remains in the wastewater rather than neutralizing the wastewater to a pH range higher than 9.2 in which manganese can be practically completely separated. Such a pH range can be easily controlled by adding a small amount of neutralizing agent, and manganese can be properly removed.

When the pH of the wastewater is adjusted so as to exceed 9.2, manganese can be completely separated and removed, but a large amount of neutralizing agent is required as in the conventional method and an efficient manganese removal treatment cannot be conducted. On the other hand, when the pH of the wastewater is adjusted so as to be lower than 8.0, the required amount of neutralizing agent decreases, but there is a possibility that manganese in the wastewater increases to a concentration exceeding the removal ability of the manganese oxidizing bacteria when separating the pH-adjusted wastewater by the manganese oxidizing bacteria in the drainage channel and there is a possibility that manganese in the wastewater cannot be sufficiently removed.

The pH adjustment can be conducted, for example, by adding a neutralizing agent. Specifically, slaked lime, limestone, and the like can be used as the neutralizing agent. In the present embodiment, it is possible to effectively decrease the used amount of neutralizing agent as compared to the conventional method and to conduct an efficient treatment by setting the pH adjustment range to 8.0 or higher and 9.2 or lower.

### [Liquid Passing through Drainage Channel Step]

In the liquid passing through drainage channel step, the pH-adjusted wastewater is supplied to a drainage channel (discharge pipe) in which manganese oxidizing bacteria are present and the pH-adjusted wastewater is allowed to pass through the drainage channel over a predetermined retention time.

As described above, in the pH adjusting step, manganese is only roughly separated and removed while adjusting the pH by using a relatively small amount of neutralizing agent, and manganese thus remains in the pH-adjusted wastewater at a concentration of about several mg/l. In the liquid passing through the drainage channel step, manganese which cannot be separated and removed by such a pH adjustment but remains at a concentration of about several mg/l is removed by utilizing manganese oxidizing bacteria propagated in the drainage channel. Specifically, the wastewater is allowed to pass through a drainage channel having a predetermined length over a predetermined retention time.

When allowing the wastewater to pass through the drainage channel, it is important to secure the contact area between the wastewater and the surface of the drainage channel, namely, the inner surface of the drainage channel in which the manganese oxidizing bacteria are present, and the retention time of wastewater in the drainage channel is set to 1 hour or longer from that point of view.

In addition, the length of the drainage channel (drainage path) is set to a distance of 3 km or longer. It is possible to sufficiently bring the manganese oxidizing bacteria and the wastewater containing manganese into contact with each other by allowing the wastewater to flow through the drainage channel having a distance of 3 km or longer over a retention time of 1 hour or longer in this manner.

Incidentally, the drainage channel is not required to have a straight line structure, and for example, it may have a structure in which the drainage channel folds back in the middle several times. In addition, the drainage channel can appropriately have a reasonable structure, for example, a covered conduit or an opened structure depending on the conditions preferable for inhabitation of the manganese oxidizing bacteria. In addition, an obstacle and the like may be appropriately provided at the places through which the wastewater flows so as to increase the contact opportunities of the wastewater with the channel wall on which the manganese oxidizing bacteria are likely to proliferate.

Here, the "manganese oxidizing bacteria" is a generic term for microorganisms which exhibit the ability to oxidize manganese. Specifically, the manganese oxidizing bacteria are not particularly limited, and examples thereof may include Hyphomicrobium, Magnetospirillum, Geobacter, Bacillus, and Pseudomonas. In addition, the abundance (concentration) of the manganese oxidizing bacteria in the drainage channel is also not particularly limited as long as it is a concentration at which manganese in the wastewater can be effectively separated and removed, but for example, it is preferably a high concentration of about from 100 mg/L to 1000 mg/L.

Incidentally, it is preferable that the essential nutrient salts for the manganese oxidizing bacteria are provided in the drainage channel so that the manganese oxidizing bacteria can efficiently multiply, but various kinds of salts are contained in the wastewater such as a barren solution discharged after nickel recovery through the HPAL process, and the environment in which the manganese oxidizing bacteria can favorably multiply is established in the drainage channel by allowing such wastewater to pass through the drainage channel.

In addition, in the method of removing manganese according to the present embodiment, when manganese oxidizing bacteria are not sufficiently multiplied or the manganese load in the wastewater is increased, it is preferable to increase the concentration of manganese in the wastewater to be supplied to the drainage channel by approximately 1 mg/l per month by gradually decreasing the set pH value of the wastewater from 9.2 and to gradually increase the manganese load with respect to the manganese oxidizing bacteria present in the drainage channel.

This makes it possible to efficiently multiply the manganese oxidizing bacteria in the drainage channel and to form a membrane of manganese oxidizing bacteria, a so-called biofilm on which the oxidization of manganese is conducted on the inner wall surface of the drainage channel. Moreover, it is possible to effectively oxidize and remove manganese as the wastewater containing manganese passes through the pipe after the biofilm is formed, and it is thus possible to even more efficiently oxidize manganese in the wastewater by the manganese oxidizing bacteria.

Specifically, as the concentration of manganese in the wastewater at the entrance of the drainage channel, it is possible to increase the concentration of manganese remaining in the wastewater up to 10 mg/l of the limit by adjusting the pH of the wastewater to decrease to about 8.0. In other words, the biofilm of the manganese oxidizing bacteria on which the oxidization of manganese is conducted is gradually formed in the drainage channel by gradually increasing the concentration of manganese in the wastewater to pass through the drainage channel to such a concentration. Hence, even in a case in which wastewater containing manganese at a concentration increased up to 10 mg/l is introduced into the drainage channel, it is possible to separate and remove manganese in the wastewater by the multiplied manganese oxidizing bacteria and to decrease the concentration of manganese to a practically sufficient concentration by allowing the wastewater to flow a distance of 3 km or longer over a retention time of 1 hour or longer.

Incidentally, when the speed of adjustment of the concentration of manganese is too fast, that is, the pH is rapidly decreased, the concentration of manganese increases before the biofilm on which the oxidization and removal of manganese are conducted on the pipe surface grows sufficiently, and a sufficient removal effect cannot be exerted as a result. Hence, it is preferable to increase the concentration of manganese at a rate of 1 mg/l or less per month as the degree of increase in concentration of manganese.

### EXAMPLES

Hereinafter, the present invention will be described more specifically with reference to Examples, but the present invention is not limited to the following Examples at all.

### [Example 1]

In the wastewater treatment of hydrometallurgy after nickel was recovered from a nickel oxide ore by using a known HPAL process, a drainage channel made of an iron pipe having an inner diameter of 0.26 m and a length of 10 km was prepared. Several places at which the flowing liquid was able to be sampled were provided in the drainage channel.

It was confirmed that manganese oxidizing bacteria were present in the drainage channel by sampling the pipe inner wall at the respective sampling ports provided at several places.

Specifically, the DNA analysis of test samples for the pipe inner wall was conducted, and as a result, the number of base sequences of bacteria which were highly likely to be manganese oxidizing bacteria was 975 and the number of base sequences of other bacteria was 2,801 among 3,776 of known base sequences which were detected, at least 1/4 of the identified DNAs was manganese oxidizing bacteria, and it was thus confirmed that manganese oxidizing bacteria were present on the pipe inner wall. As the manganese oxidizing bacteria, the presence of bacteria belonging to Hyphomicrobium, Magnetospirillum, Geobacter, Bacillus, and Pseudomonas was confirmed. Incidentally, the known base sequences refer to the base sequences of the bacteria which were registered in the database at the time of DNA analysis.

First, the pH of the wastewater was adjusted to be in a range of from 9.0 to 9.2 by adding slaked lime as a neutralizing agent to the wastewater to flow through the drainage channel in advance. Subsequently, the pH-adjusted wastewater was allowed to pass through a thickener and a sedimentation basin to remove greater portions of iron, aluminum, and manganese. The concentration of manganese after this treatment was 0.16 mg/l. In other words, wastewater containing manganese at such a concentration cannot be discharged as it is.

Next, this wastewater was supplied to the drainage channel which had an inner diameter of 0.26 m and a length of 10 km and contained the manganese oxidizing bacteria present on the inner wall and allowed to pass through the drainage channel. At this time, the retention time of the liquid in the drainage channel was controlled to 3.3 hours, that is, the wastewater was controlled to pass through the pipe of 3 km in 1 hour by adjusting the amount of wastewater flowing through this drainage channel.

The concentration of manganese was measured by allowing the wastewater to pass through the drainage channel and sampling the wastewater at a predetermined distance from the entrance of the drainage channel, and as a result, the concentration of manganese in the wastewater at a position 5 km from the entrance was lower than the detection limit of 0.01 mg/l.

Fig. 1 is a graph illustrating the measurement results for the concentration of manganese in the wastewater sampled at the respective points with respect to the distance of the drainage channel from the entrance through which the wastewater is supplied. As can be seen from the graph in Fig. 1, a drainage channel having a length of 3 km is enough in order to allow wastewater containing manganese at a concentration of 0.16 mg/l to pass through the drainage channel and to decrease the concentration of manganese, for example, to 0.04 mg/l.

From the facts described above, it can be seen that it is possible to effectively separate and remove manganese by allowing wastewater containing manganese to pass through a drainage channel in which manganese oxidizing bacteria are present. In addition, it is possible to remove manganese to a certain extent by adding a small amount of neutralizing agent to the wastewater to slightly adjust the pH before allowing the wastewater to pass through the drainage channel and to reliably separate and remove manganese at low cost by allowing the wastewater to pass through the drainage channel thereafter.

### [Example 2]

The same drainage channel used in Example 1 was used, and the concentration of manganese in the wastewater to be supplied to the drainage channel was gradually increased by adjusting the pH of the wastewater to be supplied while gradually decreasing the amount of the neutralizing agent added so that the pH of from 9.0 to 9.2 in Example 1 gradually decreased to a pH of 8.0. As a result, the concentration of manganese in the wastewater increased at a rate of 1 mg/l per month.

In this case as well, an increase in concentration of manganese in the wastewater sampled at the point 3 km from the entrance of the drainage channel was not observed, and it was thus confirmed that manganese was effectively removed in the drainage channel.

Incidentally, the concentration of manganese in the wastewater when the pH was adjusted to 8.0 increased up to 10 mg/l at the maximum, but the concentration of manganese at the point 3 km from the entrance was decreased to lower than 0.5 mg/l and it was thus possible to stably remove manganese in the case of allowing this wastewater to pass through the drainage channel as well.

In other words, from this result of Example 2, it was found that it was possible to remove manganese to a practically acceptable level by a method utilizing manganese oxidizing bacteria in the drainage channel even when wastewater containing manganese at a concentration of 10 mg/l at the maximum was allowed to pass through the drainage channel. In addition, it was confirmed that it was possible to remarkably decrease the required amount of neutralizing agent since manganese was able to be sufficiently treated even when the pH of the wastewater was adjusted to such a low value.

### [Comparative Example 1]

The concentration of manganese to be supplied to the drainage channel was increased at a rate of 1.5 mg/l or more per month by decreasing the amount of neutralizing agent to be added to the wastewater to be supplied to the same drainage channel used in Example 2 to gradually decrease the pH of from 9.0 to 9.2 to a pH of 7.0.

However, the concentration of manganese in the wastewater sampled at the point 3 km from the entrance of the drainage channel showed a tendency to gradually increase from the initial concentration of 0.2 mg/l, and it was thus found that the enhancement of manganese removal ability in the drainage channel was not able to catch up with an increase in concentration of manganese in the wastewater.

## Claims

1. A method of removing manganese, the method comprising removing manganese from wastewater containing manganese, wherein
a pH of the wastewater is adjusted to be in a range of 8.0 or higher and 9.2 or lower, and
a pH-adjusted liquid thus obtained is supplied to a drainage channel which has a length of 3 km or longer and contains manganese oxidizing bacteria and is allowed to pass through the drainage channel over a retention time of 1 hour or longer.

2. The method of removing manganese according to claim 1, wherein
a pH value to be adjusted is decreased so that a concentration of manganese in a pH-adjusted liquid increases by 1 mg/l per month after start of an operation and a pH value adjusted is maintained at a time point at which a concentration of manganese in the pH-adjusted liquid reaches 10 mg/l when adjusting a pH of the wastewater.

3. The method of removing manganese according to claim 1 or 2, wherein the wastewater is wastewater discharged from a hydrometallurgical process to recover nickel by adding an acid to a nickel oxide ore and subjecting the nickel oxide ore to pressure leaching.
